# EUROPEAN PATENT APPLICATION

(11) **EP 2 632 222 A1**
(43) Date of publication of application: **28.08.2013**
(21) Application number: 12006290.6
(22) Date of filing: 06.09.2012
(51) Int. Cl.: H04W 72/12, H04W 48/06, H04W 84/22, H04W 88/04

(54) **Flow control for constrained wireless access points**

(30) Priority: 23.02.2012 US 201213403522
(71) Applicant: Broadcom Corporation, Irvine, CA 92617 (US)
(72) Inventor: Nagarajan, Jayaraman, 560017 Bangalore (IN); Raman, Rakesh, 560018 Bangalore (IN); Kamath, Manoj, 560043 Bangalore (IN)
(74) Representative: Jehle, Volker Armin

(57) **Abstract**

Disclosed are various embodiments that provide flow control for resource-constrained wireless access points. An access point service provides access to a network for wireless clients by way of a wireless network transceiver. A stop instruction is generated in response to determining that the wireless network transceiver is unable to process data received from the wireless clients. The stop instruction is sent to to the wireless clients by way of the wireless network transceiver. The stop instruction configures the wireless clients to cease sending data to the access point service.

## Description

### BACKGROUND

Communication systems may support wireless and wireline communications between wireless and/or wireline communication devices. The communication systems range from national and/or international mobile/handheld systems to point-to-point gaming, in-home wireless networks, and audio or video wireless devices. Communication systems typically operate in accordance with one or more communication standards. For instance, wired communication systems may operate according to one or more versions of the Ethernet standard, the System Packet Interface (SPI) standard, or various other standards. Wireless communication systems may operate in accordance with one or more standards including, but not limited to, Institute of Electrical and Electronics Engineers (IEEE) 802.11, Wi-Fi Direct, Bluetooth, advanced mobile phone services (AMPS), digital AMPS, global system for mobile communications (GSM), code division multiple access (CDMA), local multi-point distribution systems (LMDS), multi-channel-multi-point distribution systems (MMDS), and/or variations thereof.

Depending on the type of wireless communication system, a wireless communication device, such as a cellular telephone, two-way radio, personal digital assistant (PDA), personal computer (PC), laptop computer, home entertainment equipment, and so on communicates directly or indirectly with other wireless communication devices. For direct communications (also known as point-to-point communications), the participating wireless communication devices tune their receivers and transmitters to the same channel or channels (*e.g.*, one of the plurality of radio frequency (RF) carriers of the wireless communication system) and communicate over that channel(s). For indirect wireless communications, each wireless communication device communicates directly with an associated base station (*e.g.*, for cellular services) and/or an associated access point (*e.g.*, for an in-home or in-building wireless network) via an assigned channel. To complete a communication connection between the wireless communication devices, the associated base stations and/or associated access points communicate with each other directly, via a system controller, via the public switched telephone network, via the Internet, and/or via some other network.

Each wireless communication device includes a built-in radio transceiver (*i.e.*, a receiver and a transmitter) or is coupled to an associated radio transceiver (*e.g.*, a station for in-home and/or in-building wireless communication networks, RF modem, *etc*.). Typically, the transceiver includes a data modulation stage and an RF stage. The data modulation stage (baseband process) converts between data and baseband signals in accordance with the particular wireless communication standard. The RF stage (transmitter section and receiver section) converts between baseband signals and RF signals. The RF stage may be a direct conversion transceiver that converts directly between baseband and RF or may include one or more intermediate frequency stages.

Wireless devices need not be in a fixed location for the network access. Even the electrical power cannot constrain the mobility of the wireless device. Accordingly, many wireless devices run on battery power. Wireless communication devices, particularly small handheld devices and the netbooks, typically are limited in size as to what components reside in them. For example, cell phones and portable music players are handheld devices having compact electronics along with compact memory packaged in them. All these devices are mobile in nature and most of the time battery powered. Unlike desktops or personal computers which are always powered, the battery life of handheld devices may be very limited.

### BRIEF SUMMARY OF THE INVENTION

According to an aspect, a computing device comprises:
a wireless network transceiver; and
an access point service executable in the computing device, the access point service comprising:
   logic that provides access to a network for a plurality of wireless client devices by way of the wireless network transceiver;
   logic that generates a stop instruction in response to determining that the wireless network transceiver is unable to process data received from the wireless client devices; and
   logic that sends the stop instruction to the wireless client devices by way of the wireless network transceiver, the stop instruction configuring the wireless client devices to cease sending data to the access point service.

Advantageously, the access point service corresponds to a peer-to-peer group owner.

Advantageously, the access point service further comprises:
logic that generates a start instruction, subsequent to the stop instruction, in response to determining that the wireless network transceiver is able to process data received from the wireless client devices; and
logic that sends the start instruction to the wireless client devices by way of the wireless network transceiver, the start instruction configuring the wireless client devices to resume sending data to the access point service.

Advantageously, the access point service is configured to access the network by way of the wireless network transceiver.

Advantageously, the computing device further comprises another wireless network transceiver, and the access point service is configured to access the network by way of the other wireless network transceiver.

Advantageously, the wireless network transceiver corresponds to a Wi-Fi transceiver, and the other wireless network transceiver corresponds to a cellular network transceiver.

Advantageously, the computing device corresponds to a mobile telephone.

Advantageously, the computing device is battery powered.

Advantageously, logic that sends the stop instruction is configured to send a multicast packet embodying the stop instruction to the wireless client devices.

Advantageously, the multicast packet corresponds to an 802.11 action frame.

Advantageously, logic that sends the stop instruction is configured to send a respective unicast packet embodying the stop instruction to each of the wireless client devices.

Advantageously, the wireless network transceiver is determined to be unable to process data received from the wireless client devices when the wireless network transceiver is performing a network scan for a wireless station interface of the computing device.

According to an aspect, a method for providing an access point service in a computing device comprises the steps of:
providing access to a network for a plurality of wireless client devices by way of a wireless network transceiver;
generating a stop instruction in response to determining that the wireless network transceiver is unable to process data received from the wireless client devices; and
sending the stop instruction to the wireless client devices by way of the wireless network transceiver, the stop instruction configuring the wireless client devices to cease sending data to the access point service.

Advantageously, the sending step further comprises the step of sending a multicast packet embodying the stop instruction to the wireless client devices.

Advantageously, the sending step further comprises the step of sending a broadcast packet embodying the stop instruction to the wireless client devices.

Advantageously, the method further comprises the steps of:
generating a start instruction, subsequent to the stop instruction, in response to determining that the wireless network transceiver is able to process data received from the wireless client devices; and
sending the start instruction to the wireless client devices by way of the wireless network transceiver, the start instruction configuring the wireless client devices to resume sending data to the access point service.

Advantageously, the method further comprises the step of accessing the network by way of another wireless network transceiver in the computing device.

Advantageously, the wireless network transceiver corresponds to a Wi-Fi transceiver, and the other wireless network transceiver corresponds to a cellular network transceiver.

According to an aspect, a system for providing an access point service in a computing device comprises:
means for providing access to a network for a plurality of wireless client devices by way of a wireless network transceiver;
means for generating a stop instruction in response to determining that the wireless network transceiver is unable to process data received from the wireless client devices; and
means for sending the stop instruction to the wireless client devices by way of the wireless network transceiver, the stop instruction configuring the wireless client devices to cease sending data to the access point service.

Advantageously, the system further comprises:
means for generating a start instruction, subsequent to the stop instruction, in response to determining that the wireless network transceiver is able to process data received from the wireless client devices; and
means for sending the start instruction to the wireless client devices by way of the wireless network transceiver, the start instruction configuring the wireless client devices to resume sending data to the access point service.

### BRIEF DESCRIPTION OF THE DRAWINGS

Many aspects of the present disclosure can be better understood with reference to the following drawings. The components in the drawings are not necessarily to scale, emphasis instead being placed upon clearly illustrating the principles of the disclosure. Moreover, in the drawings, like reference numerals designate corresponding parts throughout the several views.

FIG. 1 is a drawing of a computing device according to various embodiments of the present disclosure.

FIGS. 2A-2C are drawings of examples of networked environments according to various embodiments of the present disclosure.

FIG. 3 is a flowchart illustrating one example of functionality implemented as portions of an access point service executed in the computing device of FIG. 1 according to various embodiments of the present disclosure.

FIG. 4 is a flowchart illustrating one example of functionality implemented as portions of a wireless client in the networked environments of FIGS. 2A-2C according to various embodiments of the present disclosure.

FIG. 5 is a schematic block diagram that provides another example illustration of the computing device of FIG. 1 according to various embodiments of the present disclosure.

### DETAILED DESCRIPTION

The present disclosure relates to providing flow control for resource constrained wireless access points. Currently, IEEE 802.11 a/b/g/n (Wi-Fi) is the ubiquitous connectivity technology employed at home, work, and other venues. Handheld devices, such as mobile phones, tablet computers, electronic book readers, and so on, may offer Wi-Fi capability. Some of these handheld devices may offer tethering capability as well. Tethering refers to the concept of sharing a network connection (*e.g.*, a cellular data connection such as third-generation (3G) or long term evolution (LTE), and so on) over Wi-Fi with other Wi-Fi capable devices.

The tethering service should be capable of providing access point (AP) services. Such access point services may be referred to as a "soft" access point. In such a configuration, the device providing the soft access point service may be able to serve a certain minimum number of Wi-Fi connections for other wireless clients, or stations (STAs). Unfortunately, the Wi-Fi hardware used in handheld devices often suffers from resource constraints such as, for example, low memory, limited processing power, and so on. Such handheld devices may be battery powered and may not be designed for primary use as access points, thereby producing such constraints relative to traditional access points.

When multiple clients are requesting service simultaneously, the handheld device providing soft access point services may get overloaded due to the constraints. Such overloading may result in dropping of packets by the soft access point service, which could lead to high latency since the source has to retransmit again. Such overloading may result in inefficient usage of the 802.11 medium. Also, such overloading may produce redundant processing of packets in the wireless client devices connected to the soft access point service while soft access point service is not able to accept packets. Further, the overloading may result in unnecessary power consumption at the wireless client device.

Various embodiments of the present disclosure provide over-the-air flow control for access point services which may be resource constrained. When an access point service is unable to process additional packets from wireless clients, the access point service sends a stop instruction to the wireless clients. The stop instruction configures the wireless clients to cease sending packets to the access point service. After the access point service has an opportunity to catch up and free available resources, the access point service may sent a start instruction to the wireless clients to configure the wireless clients to resume sending packets to the access point service. Although a wireless network is described herein in the context of access points and wireless clients, the principles of the present disclosure can be extended to peer-to-peer wireless networks such as Wi-Fi Direct. In such cases, access points may be replaced with group owners, and wireless clients/stations may be replaced with group clients. In the following discussion, a general description of the system and its components is provided, followed by a discussion of the operation of the same.

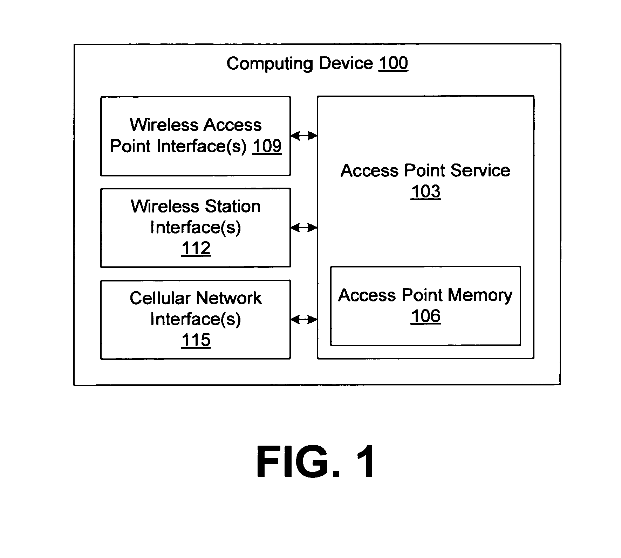

With reference to FIG. 1, shown is a computing device 100 according to various embodiments. The computing device 100 may correspond to a handheld device, a mobile device, a desktop computer, a laptop computer, personal digital assistants, cellular telephones, smartphones, set-top boxes, music players, web pads, tablet computer systems, game consoles, electronic book readers, or other devices with like capability. The computing device 100 includes an access point service 103 with an access point memory 106, one or more wireless access point interfaces 109, one or more wireless station interfaces 112, one or more cellular network interfaces 115, and/or other components.

The access point service 103 is configured to provide wireless access point services to wireless clients using Wi-Fi, Bluetooth, and/or other wireless technologies. The access point service 103 may correspond to a constrained or "soft" access point, which may not offer the resources customarily available with fully featured access point hardware. For example, the computing device 100 may be battery powered, and the memory and processing resources may be constrained for that reason. Further, the computing device 100 may be used for other activities (*e.g.*, web browsing, gaming, and/or other user interactive applications), and it may be undesirable to divert resources away from those activities. As a non-limiting example, the access point service 103 may have resources to support five simultaneous connections, while a fully featured access point may have the resources to support fifty simultaneous connections. The access point memory 106 may include buffers and other memory used to process packets and perform other operations to support the access point service 103. In one embodiment, the access point service 103 may correspond to a peer-to-peer group owner.

The wireless access point interfaces 109 correspond to one or more interfaces which are configured to provide access point functionality to wireless networks, such as Wi-Fi networks. In some embodiments, multiple wireless access point interfaces 109 may be present to support multiple wireless networks, multiple basic service sets (BSS), *etc*. In one embodiment, the wireless access point interface 109 may correspond to a peer-to-peer group owner.

The wireless station interfaces 112 correspond to one or more interfaces which are configured to act as clients or stations for wireless networks, such as Wi-Fi networks. In some embodiments, multiple wireless station interfaces 112 may be present to support multiple wireless networks, multiple basic service sets (BSS), *etc*. In one embodiment, the wireless station interface 112 may correspond to a peer-to-peer group client. The cellular network interfaces 115 correspond to one or more interfaces which are configured to provide data access to a cellular network such as a 3G network, a fourth-generation (4G) network, an LTE network, a WiMAX network, and/or other types of networks. The computing device 100 may also include other types of network interfaces such as, for example, Ethernet interfaces, universal serial bus (USB) network interfaces, token ring interfaces, and so on.

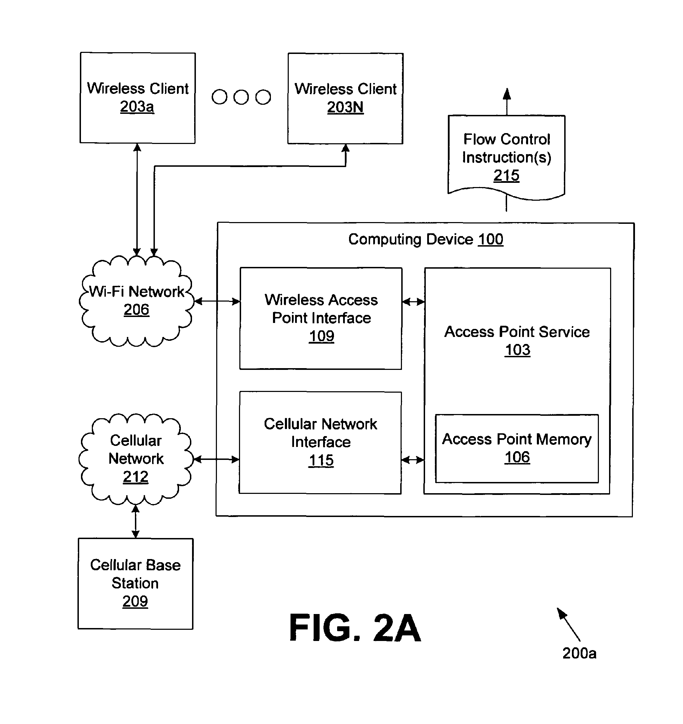

Turning now to FIG. 2A, shown is a networked environment 200a according to one embodiment. The networked environment 200a includes a computing device 100 in data communication with a plurality of wireless clients 203a ... 203N by way of a Wi-Fi network 206. The Wi-Fi network 206 may comprise an IEEE 802.11 a/b/g/n network or other similar wireless network. Each of the wireless clients 203 may correspond to a handheld device, a mobile device, a desktop computer, a laptop computer, personal digital assistants, cellular telephones, smartphones, set-top boxes, music players, web pads, tablet computer systems, game consoles, electronic book readers, or other devices with like capability. In one example, the wireless clients 203 may each correspond to a peer-to-peer group client.

The computing device 100 is also in data communication with a cellular base station 209 by way of a cellular network 212. The cellular network 212 may correspond to a 3G, 4G, LTE, WiMAX, or other network. Although the example of FIG. 2A involves a cellular network interface 115, it is understood that the example may be equally applicable to wired network interfaces providing backhaul network connectivity to the access point service 103.

In the example of FIG. 2A, the access point service 103 may be configured to facilitate tethering. In this case, tethering permits the wireless clients 203 to access resources provided by the cellular network 212. For example, the cellular base station 209 may provide connectivity to the Internet or another network for the computing device 100. The access point service 103 is configured to act as a soft access point such that data from the wireless clients 203 received over the wireless access point interface 109 is routed over the cellular network interface 115. In one example, the access point service 103 may correspond to a peer-to-peer group owner.

Because the computing device 100 may have constrained resources available for the access point service 103 (*e.g.*, the access point memory 106 may be limited, network processing capacity may be limited, and so on), the access point service 103 may become overwhelmed with connections from too many wireless clients 203 or too much data from the wireless clients 203. To facilitate over-the-air flow control, the access point service 103 is configured to send flow control instructions 215 to the wireless clients 203.

For example, the access point service 103 may be configured to send a stop instruction to the wireless clients 203 indicating that the wireless clients 203 are to cease sending data to the access point service 103. When resources again becomes available for processing packets, the access point service 103 may be configured to send a start instruction to the wireless clients 203 indicating that the wireless clients 203 may resume sending data to the access point service 103. Upon receiving the respective flow control instructions 215, the wireless clients 203 are configured to stop sending data (upon receiving a stop instruction) or to resume sending data (upon receiving a start instruction).

In one embodiment, the access point service 103 is configured to send a broadcast packet embodying the stop or start instruction to the wireless clients 203. In another embodiment, the access point service 103 is configured to send a multicast packet embodying the stop or start instruction to the wireless clients 203. As a non-limiting example, the stop or start instruction may be embodied in an IEEE 802.11 management frame of type action. In yet another embodiment, the access point service may be configured to send a respective unicast packet embodying the start or stop instruction to each of the wireless clients 203.

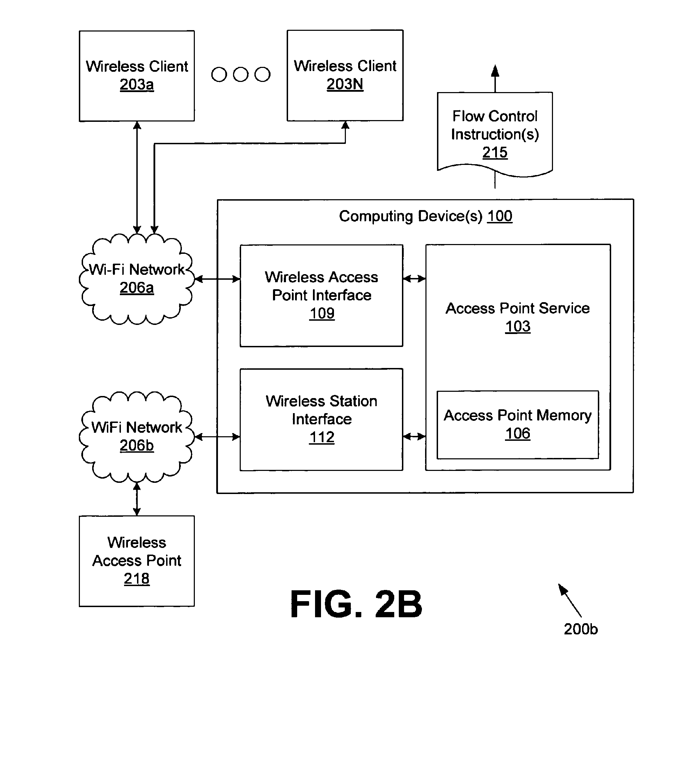

Moving on to FIG. 2B, shown is a networked environment 200b according to another embodiment. The networked environment 200b includes a computing device 100 in data communication with a plurality of wireless clients 203a ... 203N by way of a Wi-Fi network 206a. The Wi-Fi network 206a may comprise an IEEE 802.11 a/b/g/n network or other similar wireless network. Each of the wireless clients 203 may correspond to a handheld device, a mobile device, a desktop computer, a laptop computer, personal digital assistants, cellular telephones, smartphones, set-top boxes, music players, web pads, tablet computer systems, game consoles, electronic book readers, or other devices with like capability. In one example, the wireless clients 203 may each correspond to a peer-to-peer group client.

The computing device 100 is also in data communication with a wireless access point 218 by way of a Wi-Fi network 206b. The Wi-Fi network 206b may comprise an IEEE 802.11 a/b/g/n network or other similar wireless network. For example, the Wi-Fi network 206b may correspond to a different BSS from the Wi-Fi network 206a. Also, in one example, the Wi-Fi network 206b may correspond to a private network.

In the example of FIG. 2B, the access point service 103 may be configured to facilitate tethering. In this case, tethering permits the wireless clients 203 to access resources provided by the Wi-Fi network 206b. For example, the wireless access point 218 may provide connectivity to the Internet or another network for the computing device 100. The access point service 103 is configured to act as a soft access point such that data from the wireless clients 203 received over the wireless access point interface 109 is routed over the wireless station interface 212. In one example, the access point service 103 may correspond to a peer-to-peer group owner. In other embodiments, the computing device 100 may have a cellular network interface 115 or other network interfaces and may also be configured to provide tethering to such interfaces. Like the example of FIG. 2A, the access point service 103 in the example of FIG. 2B may employ over-the-air flow control instructions 215 to start or stop data transmission from the wireless clients 203.

Additionally, in the example of FIG. 2B, the wireless station interface 112 may be configured to perform a scan for available external wireless access points 218. In this scenario, the wireless network transceiver in the computing device 100 may be switched between different frequencies and channels for scanning and establishing a connection for the wireless station interface 112. This could adversely affect the traffic handled by the access point service 103, even if network traffic is backhauled by cellular network interface 115 or other network interface, when the wireless station interface 112 and the wireless access point interface 109 share the same wireless network transceiver. Accordingly, the access point service 103 may send a stop instruction to temporarily stop the traffic from the wireless clients 203, while still maintaining association with the Wi-Fi network 206a. Once the wireless scan is completed, the access point service 103 may then send a start instruction to the wireless clients 203.

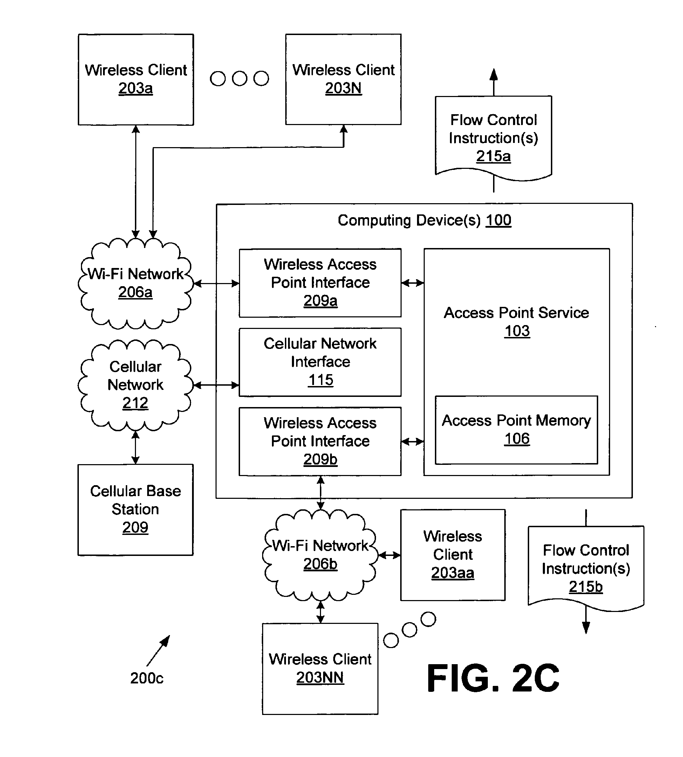

Continuing now to FIG. 2C, shown is a networked environment 200c according to yet another embodiment. The networked environment 200c includes a computing device 100 in data communication with a plurality of wireless clients 203a ... 203N by way of a Wi-Fi network 206a using a wireless access point interface 209a. The Wi-Fi network 206a may comprise an IEEE 802.11 a/b/g/n network or other similar wireless network. Each of the wireless clients 203 may correspond to a handheld device, a mobile device, a desktop computer, a laptop computer, personal digital assistants, cellular telephones, smartphones, set-top boxes, music players, web pads, tablet computer systems, game consoles, electronic book readers, or other devices with like capability. In one example, the wireless clients 203 may each correspond to a peer-to-peer group client.

The computing device 100 is also in data communication with a plurality of other wireless clients 203aa ... 203NN by way of another Wi-Fi network 206b using a wireless access point interface 209b. The Wi-Fi network 206b may comprise an IEEE 802.11 a/b/g/n network or other similar wireless network. For example, the Wi-Fi network 206b may correspond to a different BSS from the Wi-Fi network 206a. Also, in one example, the Wi-Fi network 206b may correspond to a home media network.

The computing device 100 is also in data communication with a cellular base station 209 by way of a cellular network 212. The cellular network 212 may correspond to a 3G, 4G, LTE, WiMAX, or other network. Although the example of FIG. 2C involves a cellular network interface 115, it is understood that the example may be equally applicable to wired network interfaces providing backhaul network connectivity to the access point service 103.

In the example of FIG. 2C, the access point service 103 may be configured to facilitate tethering. In this case, tethering permits the wireless clients 203a ... 203N and the wireless clients 203aa ... 203NN to access resources provided by the cellular network 212. For example, the cellular base station 209 may provide connectivity to the Internet or another network for the computing device 100. The access point service 103 is configured to act as a soft access point such that data from the wireless clients 203 received over the wireless access point interface 109 is routed over the cellular network interface 115. In one example, the access point service 103 may correspond to a peer-to-peer group owner.

The two Wi-Fi networks 206a and 206b may correspond to different applications. For example, the wireless access point interface 209a may be used to tether with friends, while the wireless access point interface 209b may be used to tether with in-home media devices. The wireless access point interface 209a and 209b may have different security methods so that traffic is controlled or isolated.

As in the previous examples, the access point service 103 may be configured to send flow control instructions 215 to the wireless clients 203. In this case, the access point service 103 may treat the Wi-Fi networks 206a and 206b differently, with flow control instructions 215a or 215b sent to the respective Wi-Fi networks 206 based at least in part on the state associated with the corresponding wireless access point interface 209a, 209b. In one embodiment, the access point memory 106 and/or other resources may be partitioned for the separate Wi-Fi networks 206.

Furthermore, one Wi-Fi network 206 may be given priority over another Wi-Fi network 206. For example, the access point service 103 may be configured to send a stop instruction to the Wi-Fi network 206a used for tethering for friends before or without sending a stop instruction to the Wi-Fi network 206b used for in-home media devices. Consequently, the data sent by the wireless clients 203a ... 203N will not overwhelm the computing device 100 so as to diminish performance experienced by the higher priority wireless clients 203aa ... 203NN.

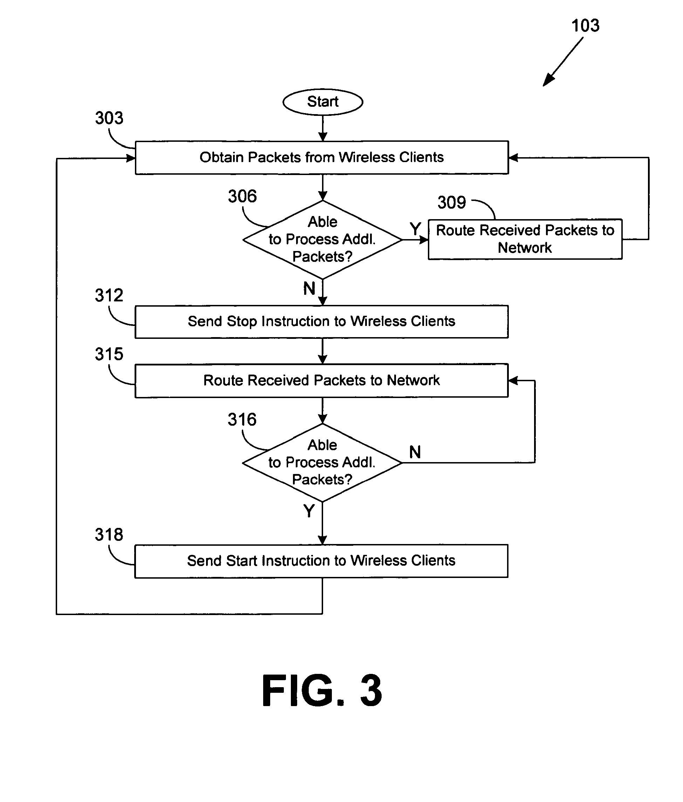

Referring next to FIG. 3, shown is a flowchart that provides one example of the operation of a portion of the access point service 103 according to various embodiments. It is understood that the flowchart of FIG. 3 provides merely an example of the many different types of functional arrangements that may be employed to implement the operation of the portion of the access point service 103 as described herein. As an alternative, the flowchart of FIG. 3 may be viewed as depicting an example of steps of a method implemented in the computing device 100 (FIG. 1) according to one or more embodiments.

Beginning with box 303, the access point service 103 obtains data packets from wireless clients 203 (FIGS. 2A-2C). In box 306, the access point service 103 determines whether the access point service 103 is able to process additional packets. If the access point service 103 is able to process additional packets, the access point service 103 routes the received packets to a network (such as a cellular network 212 (FIG. 2A) or other network) in box 309. The access point service 103 then returns to box 303 to obtain additional packets from the wireless clients 203. The additional packets may be obtained in parallel with routing the received packets to the network.

If the access point service 103 instead determines that additional packets cannot be processed, the access point service 103 moves from box 306 to box 312 and sends a stop instruction to the wireless clients 203. In some cases, the access point service 103 may send the stop instruction to some wireless clients 203 but not other wireless clients 203. In box 315, the access point service 103 routes the already received packets in the access point memory 106 (FIG. 1) to the network, thereby freeing memory, processing, and/or other resources in the computing device 100. In box 316, the access point service 103 again determines whether the access point service 103 is able to process additional packets. If the access point service 103 is able to process additional packets, the access point service 103 proceeds to box 318. Otherwise, the access point service 103 returns to box 315 and continues routing received packets to the network.

In box 318, when the access point service 103 is ready to resume processing of additional packets, the access point service 103 sends a start instruction to the wireless clients 203. Again, the access point service 103 may send the start instruction to some wireless clients 203 but not others. The access point service 103 then returns to box 303 and obtains additional packets from the wireless clients 203.

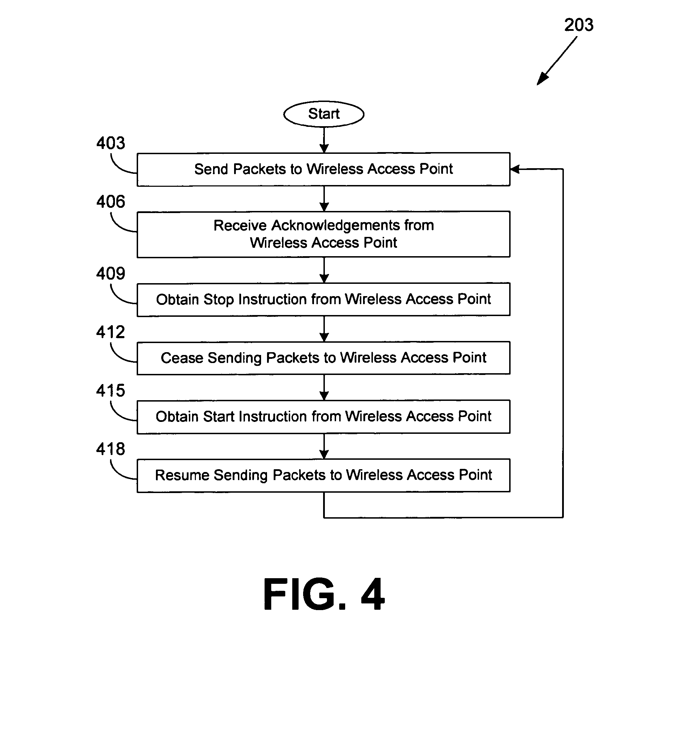

Turning now to FIG. 4, shown is a flowchart that provides one example of the operation of a portion of the logic executed by a wireless client 203 according to various embodiments. It is understood that the flowchart of FIG. 4 provides merely an example of the many different types of functional arrangements that may be employed to implement the operation of the portion of the logic executed by the wireless client 203 as described herein. As an alternative, the flowchart of FIG. 4 may be viewed as depicting an example of steps of a method implemented in the wireless client 203 according to one or more embodiments.

Beginning with box 403, the wireless client 203 sends data packets to the access point service 103 (FIG. 1) implemented by the computing device 100 (FIG. 1). In box 406, the wireless client 203 receives acknowledgments from the access point service 103. In box 409, the wireless client 203 obtains a stop instruction from the access point service 103. In response to the stop instruction, the wireless client 203 ceases sending packets to the access point service 103 in box 412. In some embodiments, the wireless client 203 may trigger flow control internally in its software to temporarily stop packets from coming from upper network protocol layers.

In box 415, the wireless client 203 obtains a start instruction from the access point service 103. In box 418, in response to the start instruction, the wireless client 203 resumes sending packets to the access point service 103. Thereafter, the wireless client 203 returns to box 403 and continues sending data to the access point service.

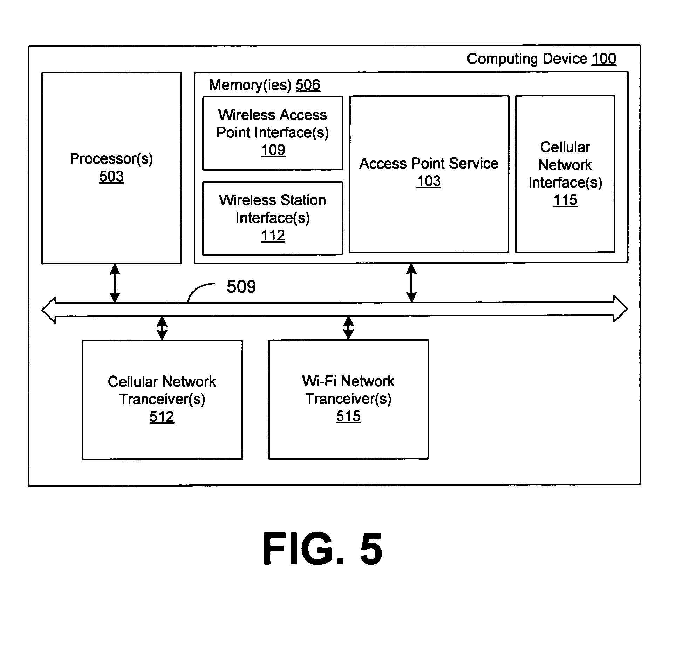

With reference to FIG. 5, shown is a schematic block diagram of the computing device 100 according to an embodiment of the present disclosure. The computing device 100 includes at least one processor circuit, for example, having a processor 503 and a memory 506, both of which are coupled to a local interface 509. The computing device 100 may include one or more cellular network transceivers 512 and one or more Wi-Fi network transceivers 515, all of which may be coupled to the local interface 509. The local interface 509 may comprise, for example, a data bus with an accompanying address/control bus or other bus structure as can be appreciated.

Stored in the memory 506 are both data and several components that are executable by the processor 503. In particular, stored in the memory 506 and executable by the processor 503 are the access point service 103, one or more wireless access point interfaces 109, one or more wireless station interfaces 112, one or more cellular network interfaces 115, and potentially other applications and device interfaces. In addition, an operating system may be stored in the memory 506 and executable by the processor 503. In some cases, the processor 503 and memory 506 may be integrated as a system-on-a-chip.

It is understood that there may be other applications that are stored in the memory 506 and are executable by the processor 503 as can be appreciated. Where any component discussed herein is implemented in the form of software, any one of a number of programming languages may be employed such as, for example, C, C++, C#, Objective C, Java^{®}, JavaScript^{®}, Perl, PHP, Visual Basic^{®}, Python^{®}, Ruby, Delphi^{®}, Flash^{®}, or other programming languages.

A number of software components are stored in the memory 506 and are executable by the processor 503. In this respect, the term "executable" means a program file that is in a form that can ultimately be run by the processor 503. Examples of executable programs may be, for example, a compiled program that can be translated into machine code in a format that can be loaded into a random access portion of the memory 506 and run by the processor 503, source code that may be expressed in proper format such as object code that is capable of being loaded into a random access portion of the memory 506 and executed by the processor 503, or source code that may be interpreted by another executable program to generate instructions in a random access portion of the memory 506 to be executed by the processor 503, *etc*. An executable program may be stored in any portion or component of the memory 506 including, for example, random access memory (RAM), read-only memory (ROM), hard drive, solid-state drive, USB flash drive, memory card, optical disc such as compact disc (CD) or digital versatile disc (DVD), floppy disk, magnetic tape, or other memory components.

The memory 506 is defined herein as including both volatile and nonvolatile memory and data storage components. Volatile components are those that do not retain data values upon loss of power. Nonvolatile components are those that retain data upon a loss of power. Thus, the memory 506 may comprise, for example, random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

Also, the processor 503 may represent multiple processors 503 and the memory 506 may represent multiple memories 506 that operate in parallel processing circuits, respectively. In such a case, the local interface 509 may be an appropriate network that facilitates communication between any two of the multiple processors 503, between any processor 503 and any of the memories 506, or between any two of the memories 506, *etc*. The local interface 509 may comprise additional systems designed to coordinate this communication, including, for example, performing load balancing. The processor 503 may be of electrical or of some other available construction.

Although the access point service 103, the wireless access point interfaces 109, the wireless station interfaces 112, the cellular network interfaces 115, and other various systems described herein may be embodied in software or code executed by general purpose hardware, as an alternative the same may also be embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, or other components, *etc*. Such technologies are generally well known by those skilled in the art and, consequently, are not described in detail herein.

The flowcharts of FIGS. 3 and 4 show the functionality and operation of an implementation of portions of the access point service 103 and the logic implemented by the wireless client 203 (FIGS. 2A-2C). If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor 503 in a computer system or other system. The machine code may be converted from the source code, *etc*. If embodied in hardware, each block may represent a circuit or a number of interconnected circuits to implement the specified logical function(s).

Although the flowcharts of FIGS. 3 and 4 show a specific order of execution, it is understood that the order of execution may differ from that which is depicted. For example, the order of execution of two or more blocks may be scrambled relative to the order shown. Also, two or more blocks shown in succession in FIGS. 3 and 4 may be executed concurrently or with partial concurrence. Further, in some embodiments, one or more of the blocks shown in FIGS. 3 and 4 may be skipped or omitted. In addition, any number of counters, state variables, warning semaphores, or messages might be added to the logical flow described herein, for purposes of enhanced utility, accounting, performance measurement, or providing troubleshooting aids, *etc*. It is understood that all such variations are within the scope of the present disclosure.

Also, any logic or application described herein, including the access point service 103, the wireless access point interfaces 109, the wireless station interfaces 112, and the cellular network interfaces 115, that comprises software or code can be embodied in any non-transitory computer-readable medium for use by or in connection with an instruction execution system such as, for example, a processor 503 in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system.

The computer-readable medium can comprise any one of many physical media such as, for example, magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A computing device, comprising:
a wireless network transceiver; and
an access point service executable in the computing device, the access point service comprising:
logic that provides access to a network for a plurality of wireless client devices by way of the wireless network transceiver;
logic that generates a stop instruction in response to determining that the wireless network transceiver is unable to process data received from the wireless client devices; and
logic that sends the stop instruction to the wireless client devices by way of the wireless network transceiver, the stop instruction configuring the wireless client devices to cease sending data to the access point service.

2. The computing device of claim 1, wherein the access point service corresponds to a peer-to-peer group owner.

3. The computing device of claim 1, wherein the access point service further comprises:
logic that generates a start instruction, subsequent to the stop instruction, in response to determining that the wireless network transceiver is able to process data received from the wireless client devices; and
logic that sends the start instruction to the wireless client devices by way of the wireless network transceiver, the start instruction configuring the wireless client devices to resume sending data to the access point service.

4. The computing device of claim 1, wherein the access point service is configured to access the network by way of the wireless network transceiver.

5. The computing device of claim 1, further comprising another wireless network transceiver, and the access point service is configured to access the network by way of the other wireless network transceiver.

6. The computing device of claim 5, wherein the wireless network transceiver corresponds to a Wi-Fi transceiver, and the other wireless network transceiver corresponds to a cellular network transceiver.

7. The computing device of claim 1, wherein the computing device corresponds to a mobile telephone.

8. The computing device of claim 1, wherein the computing device is battery powered.

9. The computing device of claim 1, wherein logic that sends the stop instruction is configured to send a multicast packet embodying the stop instruction to the wireless client devices.

10. The computing device of claim 9, wherein the multicast packet corresponds to an 802.11 action frame.

11. The computing device of claim 1, wherein logic that sends the stop instruction is configured to send a respective unicast packet embodying the stop instruction to each of the wireless client devices.

12. A method for providing an access point service in a computing device, the method comprising the steps of:
providing access to a network for a plurality of wireless client devices by way of a wireless network transceiver;
generating a stop instruction in response to determining that the wireless network transceiver is unable to process data received from the wireless client devices; and
sending the stop instruction to the wireless client devices by way of the wireless network transceiver, the stop instruction configuring the wireless client devices to cease sending data to the access point service.

13. The method of claim 12, wherein the sending step further comprises the step of sending a multicast packet embodying the stop instruction to the wireless client devices.

14. The method of claim 12, wherein the sending step further comprises the step of sending a broadcast packet embodying the stop instruction to the wireless client devices.

15. A system for providing an access point service in a computing device, the system comprising:
means for providing access to a network for a plurality of wireless client devices by way of a wireless network transceiver;
means for generating a stop instruction in response to determining that the wireless network transceiver is unable to process data received from the wireless client devices; and
means for sending the stop instruction to the wireless client devices by way of the wireless network transceiver, the stop instruction configuring the wireless client devices to cease sending data to the access point service.
